Europäisches Patentamt

(19) European Patent Office

Office européen des brevets

(11) Publication number: **0 063 606**
**B1**

## EUROPEAN PATENT SPECIFICATION

(45) Date of publication of patent specification: **10.02.88**

(21) Application number: **81902860.6**

(22) Date of filing: **23.10.81**

(86) International application number:
**PCT/JP81/00295**

(87) International publication number:
**WO 82/01602 13.05.82 Gazette 82/12**

(51) Int. Cl.⁴: **G 05 B 19/405**

(54) NUMERICAL CONTROL SYSTEM.

(30) Priority: **23.10.80 JP 148758/80**

(43) Date of publication of application:
**03.11.82 Bulletin 82/44**

(45) Publication of the grant of the patent:
**10.02.88 Bulletin 88/06**

(84) Designated Contracting States:
**DE FR GB**

(56) References cited:
**DE-A-2 349 004**
**JP-A-49 027 787**
**JP-A-49 032 076**
**US-A-3 611 102**

(73) Proprietor: **FANUC LTD**
**3580, Shibokusa Aza-Komanba Oshino-mura**
**Minamitsuru-gun Yamanashi 401-05 (JP)**

(72) Inventor: **NOZAWA, Ryoichiro**
**12-1-2105, Sarugaku-cho Shibuya-ku**
**Tokyo 150 (JP)**
Inventor: **NAGAMINE, Tsuyoshi**
**7-11-9 Owada Hachioji-shi**
**Tokyo 192 (JP)**
Inventor: **KAWAMURA, Hideaki**
**1375-5, Narahara-cho Hachioji-shi**
**Tokyo 193 (JP)**
Inventor: **FUJIBAYASHI, Kentaro**
**8-6, Nishikubo 2-chome Musashino-shi**
**Tokyo 180 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a numerical control system, and more particularly to a numerical control system in which a tool or a table can be manually moved as the tool axis direction of the tool relative to a workpiece is kept unchanged.

In a machine tool, for example, a machining center, a tool or a table is rotated in the directions of the B-axis (vertical rotational direction) and the C-axis (horizontal rotational direction) so as to control the axial direction of the tool relative to a workpiece (the axial direction being termed the "tool axis direction"), and it is also moved in the directions of the three X, Y and Z axes so as to subject the workpiece to a desired machining operation.

For example, in forming a hole in the workpiece under such simultaneous 5-axis control, first of all, a tool holder is positioned by moving it in the X-, Y- and Z-axial directions unitarily with the tool, while the tool axis direction of the tool and the direction of the hole to be machined are brought into agreement by rotating the tool in the B-axial and C-axial directions. Thereafter, whilst maintaining the tool axis direction, the tool holder is, moved toward the workpiece by the simultaneous 3-axis control of the X-, Y- and Z-axes. The machining of the hole is started, and the drilling operation is performed down to a predetermined depth. Lastly, the tool is drawn out in the opposite direction to complete the drilling operation. This system has hitherto been proposed.

In the machine tool such as a machining center which conducts machining with the tool inclined relative to the tool holder in this manner, there occurs ① a case where it is desired to increase or decrease the depth of cut through a manual operation in the course of the machining with the inclined tool, or ② a case where it is desired to drill an inclined surface through a manual operation. Here, the expression "manual operation" signifies the function of moving the tool or the table by manually operating an ordinary manual pulse generator or jog button.

In the aforementioned cases ① and ②, the tool must be manually moved by the simultaneous 3-axis control of the X-, Y- and Z-axes as the tool axis direction of the tool is held in agreement with the direction of the hole.

In the manual operation of the prior art, however, the tool 12 is moved in every axial direction by means of the manual pulse generator or the jog button, and the requirement in the cases ① and ② cannot be met.

## Disclosure of the invention

The present invention has for its object to provide a novel numerical control system in which a tool can be moved by a manual operation as the tool axis direction of the tool and the direction of a hole to be machined in a workpiece are held in agreement, in other words, in the tool axis direction relative to a table (or the workpiece).

DE—A—2 349 004 discloses a numerical control system according to the precharacterising part of claim 1, and JP—A—49-32076 and US—A—3 611 102 disclose that a simple form of manual intervention to alter instructed positions is already known in the NC art.

According to the present invention there is provided a numerical control system wherein relative rotation between a tool and a table is carried out in at least one of a vertical direction θ and horizontal direction φ so as to control a tool axis direction relative to a workpiece, and relative movement is carried out also in the directions of X-, Y- and Z-axes so as to subject a workpiece to desired machining, the numerical control system being characterised in that the tool axis direction of said tool relative to said workpiece is calculated on the basis of the amount of relative rotation between said tool and said workpiece, and the tool and table are manually relatively moved in the calculated direction under simultaneous control of at least two of the X-, Y- and Z-axes, wherein letting N denote the number of pulses to be generated by a manual pulse generator and θ and φ denote the amounts of relative rotation between the tool and the table in the vertical and horizontal directions respectively, the numbers of pulses $\Delta Xp$, $\Delta Yp$ and $\Delta Zp$ to be distributed in the X-, Y- and Z-axial directions are obtained by the expressions;

$$\Delta Xp = N \cdot \sin \theta \cdot \cos \varphi$$

$$\Delta Yp = N \cdot \sin \theta \cdot \sin \varphi$$

$$Zp = N \cdot \cos \theta,$$

these numbers of pulses being used to produce relative movement between the tool and the table in the calculated direction under simultaneous control of at least two of the X, Y and Z axes.

## Brief description of the drawings

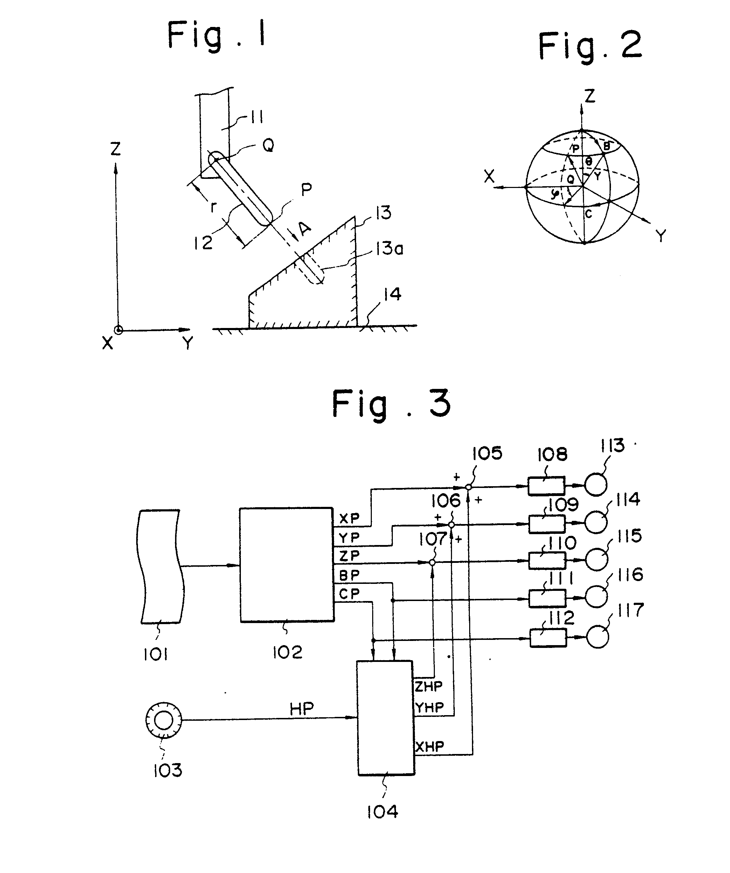

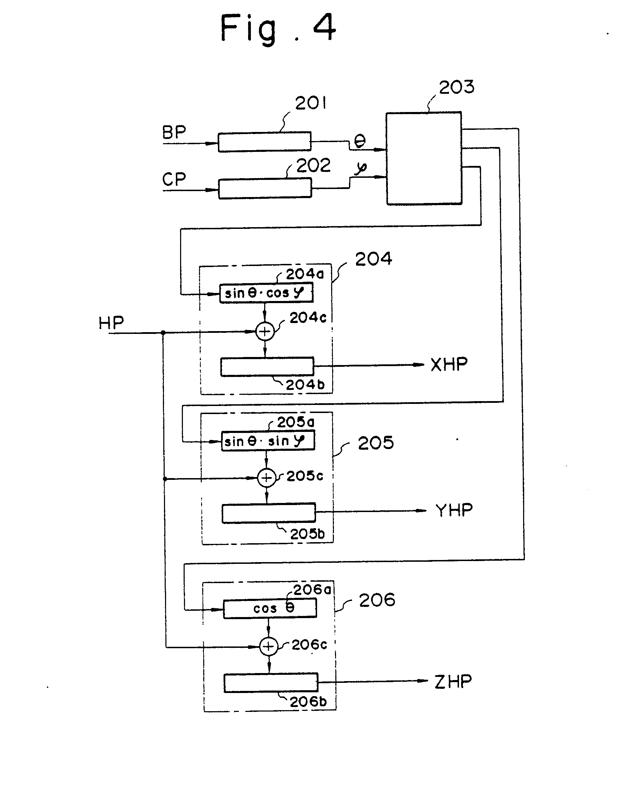

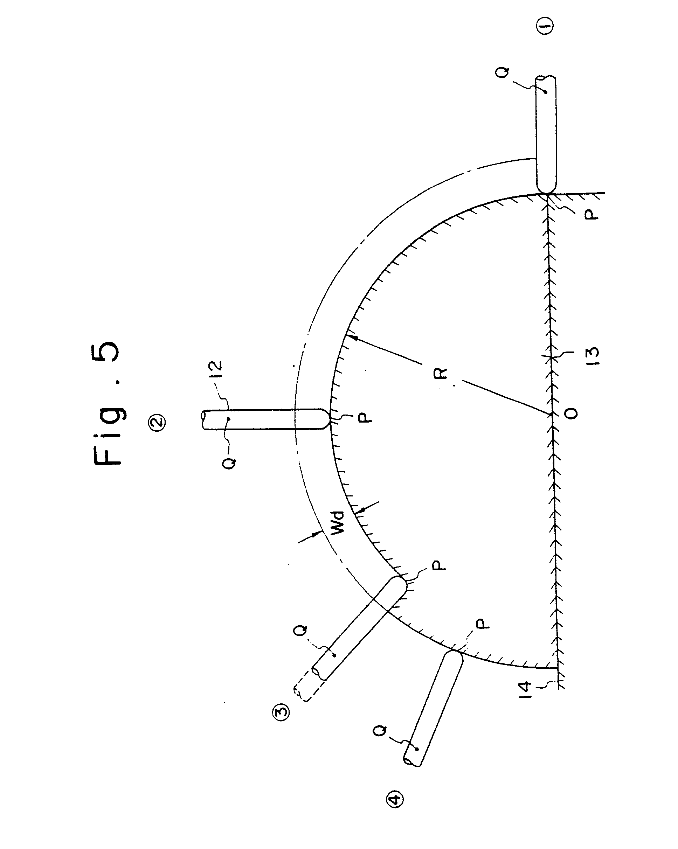

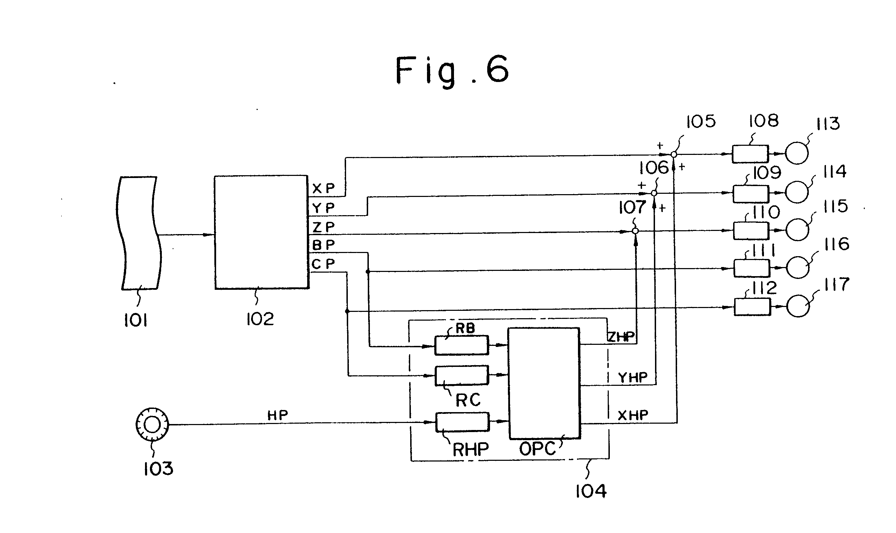

Figures 1 and 2 are explanatory views for explaining the 5-axis control in the case where a table and workpiece are fixed and where a tool is moved or rotated in the directions of the X-, Y- and Z-axes and the B- and C-axes; Figures 3 and 4 are circuit block diagrams of embodiments for realising the present invention; Figure 5 is an explanatory view of a case where the quantity of cutting has been manually decreased at a predetermined point in the course of simultaneous 5-axis control; and Figure 6 is a circuit block diagram in the case where manual pulses have been generated in the course of simultaneous 5-axis control.

Best mode for carrying out the invention

The present invention will now be described with reference to the drawings in order to explain it in greater detail.

Figures 1 and 2 are explanatory views for explaining 5-axis control in the case where a table and workpiece are fixed and where a tool is moved or rotated in the directions of the three X, Y and Z (orthogonal coordinate system) axes and the directions of the two B and C (spherical coordinate system) axes. It is also possible to rotate the table or the workpiece in the B- and C-axial directions or to rotate the workpiece in one axial direction and the tool in another axial direction. In the ensuing description, however, it is assumed that only the tool is rotated in the B- and C-axial directions. In Figure 1, numeral 11 designates a tool holder which supports a tool and which is driven in the three axial directions of the X-, Y- and Z-axes by servomotors not shown. Numeral 12 designates the tool, the front end P of which is rotated in the two axial directions of the B- and C-axes with a fulcrum at the center of rotation Q. The B-axial and C-axial directions are the vertical rotational direction and horizontal rotational direction, respectively (Figure 2), and the spherical coordinate system is formed by a rotational angle $\theta$ along the B-axis, a rotational angle $\varphi$ along the C-axis and a tool length $\gamma$. Numeral 13 indicates a workpiece, and numeral 14 a table on which the workpiece 13 is placed.

By way of example, in forming a hole 13a in the workpiece 13 under 5-axis control, first of all, the tool holder 11 is positioned by moving it in the X-, Y- and Z-axial direction unitarily with the tool 12, while the tool axis direction (the direction of the dot-and-dash line in the figure) of the tool 12 and the direction of the hole 13a to be machined are brought into agreement by rotating the tool 12 in the B-axial and C-axial directions (Figure 1). Thereafter, whilst maintaining the tool axis direction, the tool holder 11 is moved toward the workpiece 13 by the simultaneous 3-axis control of the X-, Y- and Z-axes, whereupon the machining of the hole 13a is started and the drilling operation is performed down to a predetermined depth. Lastly, the tool is drawn out in the opposite direction to complete the drilling operation.

Figure 3 is a circuit block diagram of an embodiment for realizing the present invention.

In the figure, numeral 101 indicates a command tape, numeral 102 a well-known interpolator which executes a pulse distribution computation on the basis of a movement command entered from the command tape 101, and numeral 103 a manual pulse generator according to which the rotation of its handle, not shown, over a predetermined angle results in generating a train of pulses HP that has a frequency proportional to the rotational speed of the handle and that has a number of pulses corresponding to the rotational angle. Numeral 104 indicates a manual pulse distribution circuit, which generates manual pulses XHP, YHP and ZHP in the respective X-, Y- and Z-axial directions on the basis of the tool axis direction of the tool 12 relative to the workpiece 13 or the table 14 (Figure 1) and the number of pulses N of the pulse train HP from the manual pulse generator 103. We will now imagine an orthogonal coordinate system and a spherical coordinate system the origins of which coincide with the center of rotation Q of the tool 12 as shown in Figure 2, and we will assume that the tool 12 of radius $\gamma$ has been rotated by $\theta$ in the B-axial direction (the vertical rotational direction) and by $\varphi$ in the C-axial direction (the horizontal rotational direction). At this time, the orthogonal coordinates of the position P of the front end of the tool are expressed by the following equations:

$$X_0 = \gamma \cdot \sin \theta \cdot \cos \varphi \qquad (1)$$

$$Y_0 = \gamma \cdot \sin \theta \cdot \sin \varphi \qquad (2)$$

$$Z_0 = \gamma \cdot \cos \theta \qquad (3)$$

These equations (1)—(3) are the equations for transformation from the spherical coordinate system into the orthogonal coordinate system.

Let $\Delta X_p$, $\Delta Y_p$ and $\Delta Z_p$ denote the numbers of pulses which are distributed along the X-, Y- and Z-axes by the manual operation in the state of Figure 2. If

$$X_0 : Y_0 : Z_0 = \Delta X_p : \Delta Y_p : \Delta Z_p \qquad (4)$$

is satisfied, then the tool 12 can be moved while $\theta$ and $\varphi$ are held constant. Accordingly, the manual pulse distribution circuit 104 finds $\Delta X_p$, $\Delta Y_p$ and $\Delta Z_p$ so as to satisfy Equation (4), that is, it performs the computations:

$$\Delta X_p = N \cdot \sin \theta \cdot \cos \varphi \qquad (1)'$$

$$\Delta Y_p = N \cdot \sin \theta \cdot \sin \varphi \qquad (2)'$$

$$\Delta Z_p = N \cdot \cos \theta \qquad (3)'$$

whereupon it generates the manual pulses XHP, YHP and ZHP in the X-, Y- and Z-axial directions. Numerals 105—107 indicate adders or mixers, which superpose the manual pulses XHP, YHP and ZHP generated by the manual pulses distribution circuit 104 on distributed pulses $X_p$, $Y_p$ and $Z_p$ generated by the interpolator 102, respectively. Numerals 108—112 indicate servo circuits for the respective axes, and numerals 113—117 driving motors for the respective axes.

Now, the operation of the present invention will be described.

Ordinarily, the interpolator 102 executes the pulse distribution computations on the basis of the movement command from the command tape 101, to generate the respective distribution pulses $X_p$, $Y_p$, $Z_p$, $B_p$ and $C_p$ of the X-, Y-, Z-, B- and C-axes and to apply them to the corresponding servo circuits 108—112. When supplied with the distributed pulses, the respective zero circuits drive the motors 113—117 of the corresponding axes by the well-known servo control so as to machine the workpiece as programmed. The B-axial and C-axial distributed driving pulses $B_p$ and $C_p$ generated during such NC control are applied to the respective servo circuits 111 and 112 and are also applied to the reversible counters (corresponding to current position registers), not shown, of the manual pulse distribution circuit 104. One distributed pulse $B_p$ or $C_p$ corresponds to the predetermined rotational angle of the tool 12 in the B-axial direction (the vertical rotational direction) or in the C-axial direction (the horizontal rotational direction), respectively. Therefore, when the distributed pulses $B_p$ and $C_p$ are reversibly counted by the reversible counters in accordance with the rotational direction of the tool, the current rotational angle positions $\theta$ and $\varphi$ of the tool 12 in the B- and C-axial directions are stored in the reversible counters.

Described next will be a control operation for manually machining the hole 13a after the tool holder 11 and the tool 12 have been placed into the state illustrated in Figure 1. In this case, an operator first turns the handle of the manual pulse generator 103 so as to generate a predetermined number of pulses Hp. Upon the generation of the pulses Hp, distribution circuits (1)'—(3)', not shown, contained in the manual pulse distribution circuit 104 perform their computations. Each of the distribution circuits can be constructed of a known DDA (Digital Differential Analyzer) as will be stated later. $\Delta X_p$, $\Delta Y_p$ and $\Delta Z_p$ manual pulses XHP, YHP and ZHP are respectively generated in the X-, Y- and Z-axial directions in accordance with the distribution computations, and applied to the servo circuits 108—110 through the adders 105—107 so as to drive the motors 113—115. As a result, as described before, the tool 12 moves toward the workpiece 13 while keeping its tool axis direction in agreement with the direction of the hole 13a to be machined, whereupon it carries out the drilling operation. In drawing out the tool 12, the handle of the manual pulse generator 103 may be turned in the opposite direction.

Also in case of manually increasing or decreasing the quantity of cutting during the drilling operation, the handle of the manual pulse generator 103 may be similarly turned in the forward or reverse direction in accordance with the increase in the cutting quantity.

Figure 4 shows an embodiment of the manual pulse distribution circuit 104 in Figure 3. In the figure, numerals 201 and 202 designate the reversible counters which reversibly count the distributed pulses $B_p$ and $C_p$ in the B-axial and C-axial directions in accordance with their signs, and which store the rotational angle positions $\theta$ and $\varphi$ in the B-axial and C-axial directions, respectively. Numeral 203 designates an arithmetic circuit which executes the following computations on the basis of the rotational angle positions $\theta$ and $\varphi$:

$$\sin \theta \cdot \cos \varphi, \quad \sin \theta \cdot \sin \varphi, \quad \cos \theta \tag{5}$$

Numerals 204, 205 and 206 indicate the DDAs, which include registers 204a, 205a and 206a, accumulators 204b, 205b and 206b, and adders 204c, 205c and 206c that add the contents of the registers to those of the accumulators and store the added results into the accumulators each time the pulse Hp is generated by the manual pulse generator 103. The registers 204a, 205a and 206a store the computed results $\sin \theta \cdot \cos \varphi$, $\sin \theta \cdot \sin \varphi$ and $\cos \theta$ of the arithmetic circuit 203. Now, when each of the accumulators 204b, 205b and 206b is constructed of $n$ bits, its capacity is $(2^n-1)$. Accordingly, when the operations of performing the additions between the registers and the accumulators and storing the added results in the accumulators each time the pulse Hp is generated are repeated, overflow pulses, in other words, the manual pulses XHP, YHP and ZHP numbering:

$$N \cdot \sin \theta \cdot \cos \varphi/(2^n-1) \tag{1''}$$

$$N \cdot \sin \theta \cdot \sin \varphi/(2^n-1) \tag{2''}$$

$$N \cdot \cos \theta/(2^n-1) \tag{3''}$$

are generated by the respective accumulators 204b, 205b and 206b upon the generation of the N-number of pulses Hp. Accordingly, when the computed results (5) are multiplied by $(2^n-1)$ in the arithmetic circuit 203 beforehand, the manual pulses numbering:

$$N \cdot \sin \theta \cdot \cos \varphi, \quad N \cdot \sin \theta \cdot \sin \varphi \quad \text{and} \quad N \cdot \cos \theta$$

are generated.

Figure 5 is a view for explaining a case where the depth of cut has been manually decreased from a predetermined point during the simultaneous 5-axis control.

In the figure, numeral 12 denotes a tool, numeral 13 a workpiece, numeral 14 a table, letter P the front end of the tool, and letter Q the center of rotation of the tool.

Command data is punched in the command tape so that the workpiece 13 may be subjected to cutting of a radius R and that the tool axis may normally face the center 0 of a circular arc.

Therefore, the tool 12 traces the solid line positions of ①→②→③ in the figure and performs the cutting in the workpiece as programmed. Herein, in a case where it is desired to decrease the quantity of cutting by the amount of Wd in the position ③ and the operator has generated the manual pulses by operating the manual pulse generator or jog button, the tool retracts itself in the tool axis direction in the present invention. Thenceforth, cutting of a radius (R+Wd) is performed.

Figure 6 is a circuit block diagram for keeping the tool axis direction unchanged in a case where the manual pulses have been generated during the simultaneous 5-axis control. The same parts as in Figure 3 are assigned the same symbols, and the detailed description thereof will be omitted. In Figure 6, a point different from Figure 3 is that the manual pulse distribution circuit 104 is clarified. The manual pulse distribution circuit 104 includes registers RB and RC which reversibly count the distributed pulses Bp and Cp in the B-axial and C-axial directions in accordance with the direction of movement, and which store the integrated values of the distributed pulses on the B-axis and C-axis at the time $t_n$, in other words, current rotational angle positions $\theta(t_n)$ and $\varphi(t_n)$, respectively; a register RHP which reversibly counts the manual pulses Hp generated by the manual pulse generator 103, in accordance with the turning direction of the handle of the manual pulse generator, and which stores the integrated value $Hp(t_n)$ of the manual pulses Hp at the time $t_n$; and an operation circuit OPC which executes predetermined computations to be stated later at fixed time intervals when the manual pulses Hp have been generated and which generates the compensation pulses XHP, YHP and ZHP in the X-, Y- and Z-axial directions. The operation circuit OPC contains registers which store the integrated values $HPX(t_{n-1})$, $HPY(t_{n-1})$ and $HPZ(t_{n-1})$ of the compensation pulses XHP, YHP and ZHP in the respective axial directions at a time $t_{n-1}$ preceding the time $t_n$ by a certain time interval.

The operation circuit OPC executes the computations of the following equations every fixed period of time, to generate the compensation pulses XHP, YHP and ZHP. $HPX(t_n)$, $HPY(t_n)$ and $HPZ(t_n)$ denote the integrated values of the compensation pulses XHP, YHP and ZHP at the time $t_n$, respectively.

$$HPX(t_n)=HP(t_n) \cdot \sin \theta(t_n) \cdot \cos \varphi(t_n) \tag{6}$$

$$HPY(t_n)=HP(t_n) \cdot \sin \theta(t_n) \cdot \sin \varphi(t_n) \tag{7}$$

$$HPZ(t_n)=HP(t_n) \cdot \cos \theta(t_n) \tag{8}$$

On the other hand, before Equations (6)—(8) are computed, the integrated values $HPX(t_{n-1})$, $HPY(t_{n-1})$ and $XPZ(t_{n-1})$ of the respective compensation pulses XHP, YHP and ZHP at the time $t_{n-1}$ are stored in the registers contained in the operation circuit OPC. Therefore, the numbers of compensation pulses $\Delta HPX(t_n)$, $\Delta HPY(t_n)$ and $\Delta HPZ(t_n)$ of the respective axes at the time $t_n$ are obtained by computing the following equations:

$$\Delta HPX(t_n)=HPX(t_n)-HPX(t_{n-1}) \tag{9}$$

$$\Delta HPY(t_n)=HPY(t_n)-HPY(t_{n-1}) \tag{10}$$

$$\Delta HPZ(t_n)=HPZ(t_n)-HPZ(t_{n-1}) \tag{11}$$

Accordingly, when the compensation pulses XHP, YHP and ZHP in the numbers obtained with Equations (9)—(11) are respectively applied to the servo circuits 108—110 through the adders 105—107, the tool advances or retreats in the tool axis direction.

In the above, the present invention has been described in detail in conjunction with the embodiments, but it is not restricted to these embodiments. By way of example, the table may be rotated, as well, and the table and the tool also may be respectively rotated. Further, while a case has been described where the tool is rotated in the two axial directions of the B- and C-axes, the rotation is not restricted to that relative to the two axes but may well be one relative to only one axis, and the turning is not restricted to that relative to the B- and C-axes but may well be one relative to other axes.

Industrial applicability

According to the present invention, the simultaneous 3-axis movement control of a tool can be achieved by a manual operation. Moreover, the tool can be moved in its axis direction by a manual operation as the tool axis direction and the direction of a hole to be machined in a workpiece are held in agreement, in other words, as the inclination of the tool relative to the workpiece is held constant. As a result, the depth of cut can be manually controlled to increase or decrease even in the course of the machining with the inclined tool and further, the inclined surface of the workpiece can be manually drilled, so that a numerical control device having good operability and being capable of wide control can be provided.

## Claim

A numerical control system wherein relative rotation between a tool and a table is carried out in at least one of a vertical direction $\theta$ and horizontal direction $\varphi$ so as to control a tool axis direction relative to a workpiece, and relative movement is carried out also in the directions of X-, Y- and Z-axes so as to subject a workpiece to desired machining, the numerical control system being characterized in that the tool axis direction of said tool relative to said workpiece is calculated on the basis of the amount of relative rotation between said tool and said workpiece, and the tool and table are manually relatively moved in the calculated direction under simultaneous control of at least two of the X-, Y- and Z-axes, wherein letting N denote the number of pulses to be generated by a manual pulse generator and $\theta$ and $\varphi$ denote the amounts of relative rotation between the tool and the table in the vertical and horizontal directions respectively, the numbers of pulses $\Delta Xp$, $\Delta Yp$ and $\Delta Zp$ to be distributed in the X-, Y- and Z-axial directions are obtained by the expressions:

$$\Delta Xp = N \cdot \sin \theta \cdot \cos \varphi$$

$$\Delta Yp = N \cdot \sin \theta \cdot \sin \varphi$$

$$\Delta Zp = N \cdot \cos \theta,$$

these numbers of pulses being used to produce relative movement between the tool and the table in the calculated direction under simultaneous control of at least two of the X, Y and Z axes.

## Patentanspruch

Numerisches Steuersystem,

bei dem eine relative Drehung zwischen einem Werkzeug und einem Tisch in einer vertikalen Richtung $\theta$ und einer horizontalen Richtung $\varphi$ oder wenigstens einer dieser beiden Richtungen ausgeführt wird, um die Achsenrichtung eines Werkzeugs relativ zu einem Werkstück zu steuern,

und bei dem außerdem eine relative Verschiebung in X-, Y- und Z-Achsenrichtung ausgeführt wird, um das Werkstück einem gewünschten Bearbeitungsvorgang zu unterziehen,

dadurch gekennzeichnet,

daß die Achsenrichtung des Werkzeugs relativ zu dem Werkstück berechnet wird auf der Basis des Betrags der relativen Drehung zwischen dem Werkzeug und dem Werkstück

und daß das Werkzeug und der Tisch in der berechneten Richtung unter gleichzeitiger Steuerung der X-, Y- und Z-Achsen oder wenigstens zweier dieser Achsen manuell relativ bewegt werden,

wobei man die auf die X-, Y- und Z-Achsenrichtungen zu verteilenden Impulszahlen $\Delta Xp$, $\Delta Yp$ und $\Delta Zp$ durch die Ausdrücke

$$\Delta Xp = N \cdot \sin \theta \cdot \cos \varphi$$

$$\Delta Yp = N \cdot \sin \theta \cdot \sin \varphi$$

$$\Delta Zp = N \cdot \cos \theta$$

erhält, (worin N die Anzahl der von einem manuellen Impulsgenerator zu erzeugenden Impulse und $\theta$ und $\varphi$ die Beträge der relativen Drehung zwischen dem Werkzeug und dem Tisch in vertikaler bzw. horizontaler Richtung bedeuten)

wobei diese Impulszahlen zur Erzeugung einer Relativbewegung zwischen dem Werkstück und dem Tisch in der berechneten Richtung unter gleichzeitiger Steuerung der X-, Y- und Z-Achsen oder wenigstens zweier dieser Achsen verwendet werden.

## Revendication

Un système de commande numérique dans lequel la rotation relative entre un outil et une table est effectuée dans au moins l'une parmi une direction verticale $\theta$ et une direction horizontale $\varphi$ afin de commander une direction d'axe d'outil par rapport à une pièce, et dans lequel un mouvement relatif est effectué également dans les directions des axes X, Y et Z afin de soumettre une pièce à un usinage désiré, le système de commande numérique étant caractérisé en ce que la direction d'axe d'outil dudit outil par rapport à ladite pièce est calculée d'après l'importance de la rotation relative entre ledit outil et ladite pièce, et l'outil et la table sont déplacés manuellement et relativement dans la direction calculée sous la commande simultanée d'au moins deux des axes X, Y et Z, dans lequel en désignant par N le nombre des impulsions à générer par un générateur manuel d'impulsions et par θ et φ les valeurs de la rotation relative entre l'outil et la table dans les directions verticale et horizontale respectivement, les nombres des impulsions ΔXp, ΔYp, et ΔZp à répartir dans les directions des axes X, Y et Z sont obtenues par les expressions:

$$\Delta Xp = N \cdot \sin \theta \cdot \cos \varphi$$

$$\Delta Yp = N \cdot \sin \theta \cdot \sin \varphi$$

$$\Delta Zp = N \cdot \cos \theta,$$

ces nombres d'impulsions étant utilisés pour produire un mouvement relatif entre l'outil et la table dans la direction calculée sous la commande simultanée de deux au moins des axes X, Y et Z.

# Fig . 1

# Fig . 2

# Fig . 3

1

# 0 063 606

# Fig . 4

Fig . 5

Fig.6

0 063 606